# EUROPÄISCHE PATENTSCHRIFT

(11) **EP 2 400 137 B1**
(45) Veröffentlichungstag und Bekanntmachung des Hinweises auf die Patenterteilung: **03.04.2019**
(21) Anmeldenummer: 11171470.5
(22) Anmeldetag: 27.06.2011
(51) Int. Cl.: F02K 7/10, F02K 7/00, F02C 3/16

(54) **Rotierende Staustrahlturbine mit Abgasturbolader**
Rotating ram-jet turbine with exhaust turbocharger
Turbine pour statoréacteur rotatif avec turbocompresseur

(30) Priorität: 28.06.2010 AT 10852010
(43) Veröffentlichungstag der Anmeldung: 28.12.2011
(73) Patentinhaber: RJT GmbH & Co KG, 4641 Steinhaus (AT)
(72) Erfinder: Hager, Erich, 8061 St. Radegund (AT)
(74) Vertreter: Wirnsberger, Gernot

(56) Entgegenhaltungen:
- DE-A1- 2 505 796
- FR-A- 1 185 945
- GB-A- 2 019 943

## Beschreibung

Die Erfindung betrifft eine Staustrahlturbine, umfassend ein Gehäuse, eine am Gehäuse drehbar gelagerte Welle, zumindest einen auf der Welle drehfest angebrachten Diskus, welcher das Gehäuse in mehrere Kammern mit zumindest einer Vordruckkammer und zumindest einer Auspuffkammer unterteilt, und zumindest ein mit dem zumindest einen Diskus verbundenes Staurohr, in welchem eine Verbrennung eines zugeführten Brennstoffs erfolgt und welches von der zumindest einen Vordruckkammer in die zumindest eine Auspuffkammer führt und welches derart angeordnet ist, dass sich bei Rotation des zumindest einen Diskus in dem zumindest einen Staurohr ein Staudruck aufbaut und dass ein durch aus dem zumindest einen Staurohr in die zumindest eine Auspuffkammer ausgestoßene Gase erzeugter Schub eine Rotation des zumindest einen Diskus bewirkt.

Des Weiteren betrifft die Erfindung eine Verwendung einer derartigen Staustrahlturbine.

Schließlich betrifft die Erfindung ein Verfahren zur Umwandlung von chemischer in mechanische Energie, insbesondere mit einer Staustrahlturbine, wobei in zumindest einem Staurohr Brennstoff verbrannt wird, wodurch ein Schub erzeugt und eine Welle in Rotation versetzt wird.

In der WO 93/15312 A1 ist eine Variante einer Staustrahlturbine der eingangs genannten Art offenbart. Insbesondere sind Staustrahlturbinen gezeigt, bei denen unregelmäßig stark gekrümmte Strahlbrenner auf einem Diskus angeordnet sind und von Einlasszonen in Auspuffzonen führen. Eine Länge eines Strahlbrenners entspricht deutlich weniger als einer halben Umdrehung um eine zentrale Welle. Dabei erzeugt ein Rotor einen Luftmassenstrom in die Einlasszone der Staustrahlturbine. Der Rotor ist mechanisch an die Welle gekoppelt, welche von den Strahlbrennern angetrieben wird. Daraus ergibt sich der Nachteil, dass ein solcher Rotor mechanische Rotationsenergie verbraucht, welche in der Folge für einen an die Welle angeschlossenen Verbraucher, wie beispielsweise einen Stromgenerator, nicht mehr zur Verfügung steht. In dieser Hinsicht verringert ein derartiger Rotor den Wirkungsgrad der Staustrahlturbine. Weitere Nachteile ergeben sich aus der starken, inhomogenen Krümmung der Strahlbrenner, welche Umlenk- und Strömungsverluste verursacht, sowie aus deren begrenzter Länge, welche unter Umständen ein unvollständiges Ausbrennen eines Brennstoff-Luft-Gemisches zur Folge hat. Außerdem erfolgt bei den gezeigten Staustrahlturbinen keine Nutzung der energiereichen Abgase der Strahlbrenner.

In der DE 101 18 373 A1 ist ein Rotationsstaustrahltriebwerk offenbart, bei dem ein herkömmliches Staustrahltriebwerk spiralförmig um einen Zylinder gewickelt ist. Weitere Bestandteile wie etwa Gehäuse oder Einlass- und Auslasskammern werden nicht angeführt. Vielmehr wird nur die prinzipielle Funktionsweise eines Rotationsstaustrahltriebwerks dargelegt und es muss davon ausgegangen werden, dass damit nur schlechte Wirkungsgrade erreicht werden können. Eine weitere Staustrahlturbine ist aus der FR-1185945 bekannt.

Der Erfindung liegt demnach die Aufgabe zugrunde, eine Staustrahlturbine der eingangs genannten Art anzugeben, mit der eine Verbesserung des Wirkungsgrades der Staustrahlturbine erreicht wird.

Außerdem soll eine Verwendung einer solchen Staustrahlturbine angegeben werden, welche zur rationellen Energieerzeugung unter Berücksichtigung ökologischer Aspekte dient.

Eine weitere Aufgabe der Erfindung ist es, ein Verfahren der eingangs genannten Art anzugeben, mit dem eine Wirkungsgradverbesserung erreicht werden kann.

Die erste Aufgabe wird dadurch gelöst, dass bei einer Staustrahlturbine der eingangs erwähnten Art zumindest ein Abgasturbolader vorgesehen ist, welcher unter Ausnutzung eines aus der zumindest einen Auspuffkammer austretenden Abgases ein Gas, insbesondere Luft, unter Druck in die zumindest eine Vordruckkammer fördert.

Ein mit der Erfindung erzielter Vorteil ist insbesondere darin zu sehen, dass eine Steigerung des Wirkungsgrades der Staustrahlturbine erreicht wird. Durch die Erzeugung einer Druckdifferenz zwischen Vordruckkammer und Auspuffkammer wird eine zweiphasige Beschleunigung eines Arbeitsgases erreicht; zusätzlich zu der aufgrund der Verbrennung des Brennstoffs erfolgenden Beschleunigung werden Gehäusevordruck (in der Vordruckkammer) und Staudruck (in dem Staurohr) im Staurohr in Geschwindigkeit umgesetzt. Das Vorverdichten der zugeführten Luft bzw. allgemein des zugeführten Gases erfolgt unter Ausnutzung der Energie der Abgase, ohne die von der Staustrahlturbine erzeugte mechanische Energie hierfür zu verwenden. Dies trägt ebenfalls zur Wirkungsgradsteigerung bei.

Es ist von Vorteil, wenn der zumindest eine Abgasturbolader außerhalb des Gehäuses angeordnet ist. Dadurch wird eine vereinfachte, kompakte Konstruktion der Staustrahlturbine erreicht.

Es hat sich bewährt, dass das zumindest eine Staurohr einen Einströmkanal, einen Brennraum und eine Austrittsdüse umfasst, wobei der Einströmkanal in der zumindest einen Vordruckkammer beginnt und die Austrittsdüse in der zumindest einen Auspuffkammer endet. Dies stellt einen effektiven Aufbau eines Staurohrs dar. Der Einströmkanal dient dem Staudruckaufbau, im Brennraum erfolgt eine Zündung von zugeführtem Brennstoff und die Austrittsdüse dient der effizienten Umsetzung einer bei der Verbrennung frei werdenden Wärmeenergie in Bewegungsenergie durch ein expandierendes Gas.

Bevorzugt ist das zumindest eine Staurohr spiralförmig um die Welle an und/oder in dem zumindest einen Diskus angeordnet. Dadurch wird eine optimale Umsetzung des Schubs eines Staurohrs in ein Drehmoment auf den Diskus um die Drehachse der Welle und damit in Rotationsenergie, welche über die Welle zur weiteren Nutzung zur Verfügung steht, erreicht.

Es ist von Vorteil, wenn das zumindest eine Staurohr eine konstante Krümmung aufweist. Darüber hinaus kann auch eine konstante Steigung des zumindest einen Staurohrs vorgesehen sein, und zwar auch im Bereich eines Durchtritts des zumindest einen Staurohrs durch den zumindest einen Diskus. Dadurch können Umlenkverluste des durch das Staurohr strömenden Gases sehr klein gehalten werden, was eine Erhöhung des Wirkungsgrades bewirkt.

Zweckmäßigerweise ist das zumindest eine Staurohr zur Welle beabstandet angeordnet, insbesondere mit einem Abstand von mehr als dem 3-fachen des Durchmessers des zumindest einen Staurohrs. Damit kann das die Welle antreibende Drehmoment vergrößert werden. Außerdem ergibt sich aus der Beabstandung eine geringere Krümmung des Staurohrs und damit verbunden geringere Umlenkverluste. Ein zusätzlicher Vorteil ist, dass wegen der Beabstandung zur Welle eine größere Länge des Staurohrs möglich ist.

Es hat sich bewährt, dass das zumindest eine Staurohr eine Länge aufweist, sodass es einen Winkel entsprechend einer halben bis eineinhalb Umdrehungen um die Welle, insbesondere zwischen drei und fünf Viertelumdrehungen, überstreicht. Bei einer derartigen Länge des Staurohrs kann bei vertretbaren Strömungsverlusten ein vollständiger Ausbrand des Brennstoffs optimal erfolgen.

Zweckmäßigerweise hat das zumindest eine Staurohr einen kreisförmigen Querschnitt mit in seinem Verlauf veränderlichem Durchmesser. Dies bietet die Möglichkeit einer Anpassung der Kanalgeometrie, um beispielsweise Staudruckaufbau und Schubentfaltung zu optimieren und Strömungsverluste zu minimieren.

Um einen kontrollierten Zündvorgang zu gewährleisten, ist eine Zündvorrichtung in dem zumindest einen Staurohr vorgesehen. Durch eine mit der Zündvorrichtung erfolgte Fremdzündung ergeben sich beim Betrieb der Staustrahlturbine die Möglichkeiten einer Permanentzündung mit der Zündvorrichtung oder einer selbstständigen Flammerhaltung.

Es hat sich bewährt, dass in dem zumindest einen Staurohr ein Bypasskanal zur Aufteilung eines einströmenden Massenstroms in einen Zündstrahl und einen Arbeitsstrahl sowie im weiteren Verlauf des zumindest einen Staurohrs eine Zusammenführung dieser Strahlen vorgesehen sind. Daraus ergibt sich der Vorteil eines besseren Zündverhaltens/Zündvorgangs, was einen besseren Ausbrand und damit einen höheren Wirkungsgrad zur Folge hat.

Zweckmäßigerweise sind eine Zündvorrichtung und eine Brennstoffzufuhr in das zumindest eine Staurohr im Bereich des Zündstrahls vorgesehen. Daraus ergibt sich der Vorteil, dass ein eventuell im Bypasskanal verlangsamter Zündstrahl leichter zündet. Der Zündstrahl kann sodann den Arbeitsstrahl, der den Hauptmassenstrom darstellt, zünden oder lediglich durch Mischung den Hauptmassenstrom auf Prozesstemperatur bringen. Durch internen Wärmetausch können umgebende Ausbrandzonen relativ gekühlt werden, wodurch die Materialbelastung minimiert wird.

Es ist von Vorteil, wenn eine zusätzliche Zündvorrichtung und eine Brennstoffzufuhr in das zumindest eine Staurohr im Bereich des Arbeitsstrahls zur mehrstufigen Verbrennung vorgesehen sind. Durch eine Nachverbrennung kann eine Leistungs- bzw. Wirkungsgradsteigerung erreicht werden.

Um eine kompakte und stabile Konstruktion zu erreichen, kann das zumindest eine Staurohr als integrierter Hohlraum in dem zumindest einen Diskus ausgeführt sein.

Es ist von Vorteil, wenn zur Brennstoffzufuhr ein Treibstoffkanal entlang einer Achse der Welle und über den zumindest einen Diskus bis zu dem zumindest einen Staurohr vorgesehen ist. Dadurch wird eine konstruktiv einfache Brennstoffzufuhr von außerhalb des Gehäuses bis zu dem zumindest einen Staurohr ermöglicht.

Eine effektive Ausführungsform ist gegeben, wenn zwei Staurohre vorgesehen sind.

Vorteilhafterweise ist zwischen dem zumindest einen Diskus und dem Gehäuse eine Bürstendichtung vorgesehen. Dadurch ist eine effektive Abdichtung zwischen Vordruckkammer und Auspuffkammer gewährleistet, welche sich durch eine hohe Temperaturbeständigkeit, geringe Reibung und geringen Druckverlust auszeichnet sowie hohe Umdrehungszahlen der Welle bzw. des Diskus zulässt, ohne erhöhte Spalt- und Scheibenreibungsverluste entstehen zu lassen. Dies stellt einen Vorteil gegenüber Labyrinthdichtungen dar.

Es ist von Vorteil, wenn zumindest ein Wärmetauscher vorgesehen ist, welcher Wärmeenergie von den aus der zumindest einen Auspuffkammer ausströmenden Abgasen auf in die zumindest eine Vordruckkammer einströmende Gase überträgt. Dadurch können die energiereichen Abgase zu einer Wirkungsgradsteigerung genutzt werden.

Zweckmäßigerweise sind im Bereich der Welle ein Rotationsanschluss für eine Brennstoffzufuhr sowie Drehübertrager für Zünd-, Mess-, Regel- und Steuerströme vorgesehen.

Um eine effektive Ausnutzung der Rotationsenergie bzw. deren Umwandlung in andere Energieformen zu erreichen, kann die Welle mit einem Getriebe und/oder einem Generator zur Umwandlung von mechanischer in elektrische Energie verbunden sein.

Es ist von Vorteil, wenn zwei Diskusse vorgesehen sind, welche das Gehäuse in zwei Vordruckkammern und eine zwischen diesen angeordnete Auspuffkammer unterteilen. Eine solche Anordnung kann zur Kompensation einer Schubkomponente parallel zur Welle genutzt werden.

Die verwendungsmäßige Aufgabe der Erfindung wird dadurch gelöst, dass eine erfindungsgemäße Staustrahlturbine zur Erzeugung von mechanischer Energie durch Verbrennung von biogenen gasförmigen oder flüssigen Brennstoffen, insbesondere von Faulgasen von Kläranlagen oder von Altspeiseölen, verwendet wird.

Eine solche Verwendung bietet den Vorteil, dass kostengünstige Energieträger, wie beispielsweise abfallende biogene oder nachwachsende biogene Brennstoffe, ohne aufwendige Veredelungstechnik (z. B. Veresterung für Altspeiseöle) zur rationellen und ökologisch ausgerichteten Energieerzeugung herangezogen werden können. Insbesondere können auch landwirtschaftliche Rohstoffe als Brennstoffe verwendet werden. Den schwierigen Verbrennungsbedingungen sowie Abgasverhältnissen der Brennstoffe wird dabei speziell Rechnung getragen. Die Verwendung kann sowohl stationär in einem Kraftwerk als auch mobil, wie beispielsweise als Kfz- oder Schiffsantrieb, erfolgen, wobei auch eine Kombination mit anderen Antriebsaggregaten vorgesehen sein kann (Hybridtechnik).

Die verfahrensmäßige Aufgabe der Erfindung wird dadurch gelöst, dass bei einem Verfahren der eingangs erwähnten Art Abgase des zumindest einen Staurohrs zum Verdichten eines der Verbrennung zugeführten Gases genutzt werden.

Ein mit der Erfindung erzielter Vorteil ist insbesondere darin zu sehen, dass eine Druckdifferenz zwischen einem Bereich vor und einem Bereich nach dem zumindest einen Staurohr unter Ausnutzung der Energie der Abgase erzeugt wird, ohne dazu die gewonnene mechanische Rotationsenergie zu verwenden. Eine damit erreichte Wirkungsgradsteigerung ist also auf zwei Umstände zurückzuführen: erstens auf den Umstand, dass wegen der Nutzung der Abgasenergie zum Vorverdichten keine mechanische Energie entnommen werden muss, was einen größeren Output über die Welle ermöglicht; zweitens auf den Umstand, dass die erzeugte Druckdifferenz eine zweiphasige Beschleunigung eines Arbeitsgases durch das zumindest eine Staurohr bewirkt - zusätzlich zu der aufgrund der Verbrennung des Brennstoffs erfolgenden Beschleunigung wird die durch Gehäusevordruck und Staudruck im Staurohr ausgebildete Druckdifferenz in Geschwindigkeit des Arbeitsgases umgesetzt (erste Phase: Beschleunigung aus Druckdifferenz; zweite Phase: Beschleunigung durch Ausdehnung des Arbeitsgases infolge der Temperaturerhöhung durch Verbrennung). Das Verfahren wird durch ein für seine Effizienz charakteristisches Temperatur-Entropie-Diagramm (T-s-Diagramm) gekennzeichnet, welches einen für die zweiphasige Beschleunigung typischen Strömungs- oder Beschleunigungszwickel aufweist.

Um ein einfaches und kostengünstig auszuführendes Verfahren zu ermöglichen, kann das Verdichten außerhalb eines Gehäuses erfolgen, in welchem chemische in mechanische Energie umgewandelt wird.

Es ist von Vorteil, wenn Wärme von den Abgasen auf das der Verbrennung zugeführte Gas wie Luft übertragen wird, d. h., dass die Abgase zur Vorwärmung in Wärmeregeneration oder Wärmerekuperation genutzt werden. Durch eine gleichzeitige Druck- und Temperaturerhöhung der einströmenden Luft unter Nutzung der Energie der Abgase wird eine beträchtliche Wirkungsgradsteigerung erreicht.

Zweckmäßigerweise erfolgen das Verdichten und die Wärmeübertragung nacheinander und jeweils außerhalb des Gehäuses. Dadurch kann das Verfahren einfach realisiert werden.

Es hat sich bewährt, dass der Brennstoff in einem spiralförmigen Staurohr mit kreisförmigem Querschnitt, optional mit veränderlichem Durchmesser und einer Länge entsprechend einer Windungsanzahl, die zwischen einer halben und eineinhalb Umdrehungen um die Welle, insbesondere zwischen drei und fünf Viertelumdrehungen, liegt, verbrannt wird. Damit werden eine optimale Umsetzung des Schubs in Rotationsenergie, eine Verringerung der Strömungsverluste, ein verbesserter Ausbrand, ein besserer Staudruckaufbau, anschließend ein verbesserter Abbau der Gesamtdruckdifferenz und damit eine bessere Beschleunigung und Umsetzung in der ersten Phase der zweiphasigen Beschleunigung sowie eine optimale Schubentfaltung und damit eine Wirkungsgraderhöhung erreicht.

Um einen besseren Zündvorgang zu erreichen, kann das in das zumindest eine Staurohr einströmende Gas in einen Zündstrahl und einen Arbeitsstrahl aufgeteilt werden, wobei beide Teilstrahlen nach Zündung des Zündstrahls wieder zusammengeführt werden. Daraus ergibt sich der Vorteil, dass ein eventuell verlangsamter Zündstrahl leichter zündet. Der Zündstrahl kann sodann den Arbeitsstrahl bzw. Hauptmassenstrom zünden oder lediglich durch Mischung den Hauptmassenstrom auf Prozesstemperatur bringen.

Es hat sich bewährt, dass eine Austrittsgeschwindigkeit eines aus dem zumindest einen Staurohr ausströmenden Gases das mindestens 1,5-fache, vorzugsweise das 2- bis 4-fache, einer Umfangsgeschwindigkeit des zumindest einen Staurohrs beträgt. Dabei ist die Umfangsgeschwindigkeit als Tangentialgeschwindigkeit zu verstehen. Durch eine derartige Austrittsgeschwindigkeit wird ein effektiver Antrieb der Welle durch den von einem Staurohr erzeugten Schub erreicht.

Vorteilhafterweise wird der Brennstoff dem zumindest einen Staurohr durch die Welle und über den zumindest einen Diskus zugeführt.

Zweckmäßigerweise wird der Brennstoff in zwei Staurohren verbrannt, wodurch ein effektives Verfahren auch in maschinendynamischer Hinsicht erreicht wird. Optional können auch mehr als zwei Staurohre vorgesehen sein.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 eine Schrägrissdarstellung einer Staustrahlturbine samt Abgasturboladern und Wärmetauschern;
Fig. 2 eine aufgeschnittene Darstellung der Staustrahlturbine gemäß Fig. 1 ohne Abgasturbolader und Wärmetauscher;
Fig. 3 einen horizontalen Schnitt entlang der Rotationsachse der Staustrahlturbine gemäß Fig. 1;
Fig. 4 einen vertikalen Schnitt entlang der Rotationsachse der Staustrahlturbine gemäß Fig. 1;
Fig. 5 ein T-s-Diagramm eines der Staustrahlturbine gemäß Fig. 1 zugrunde liegenden Verfahrens, wobei einzelne Zustandspunkte geradlinig verbunden sind.

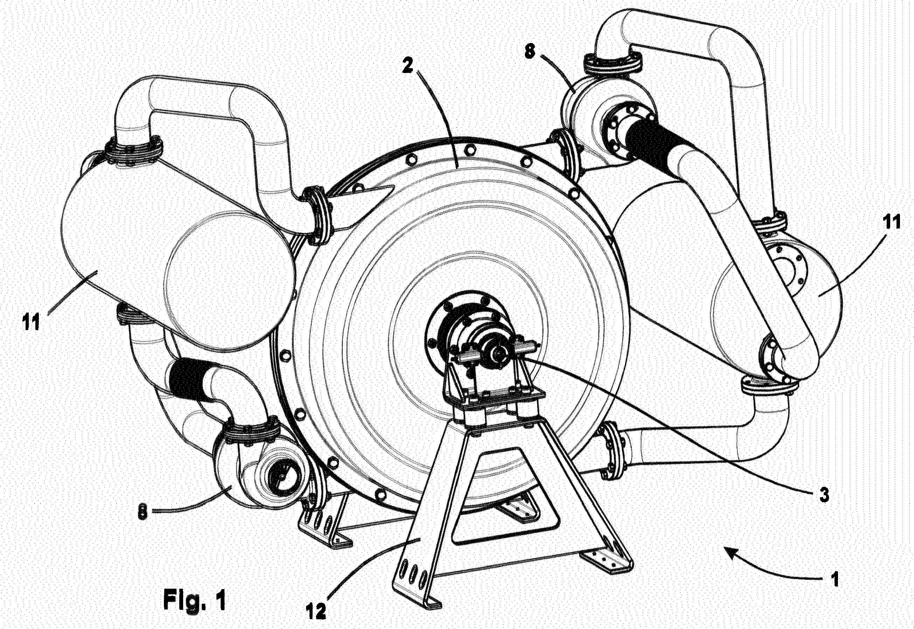

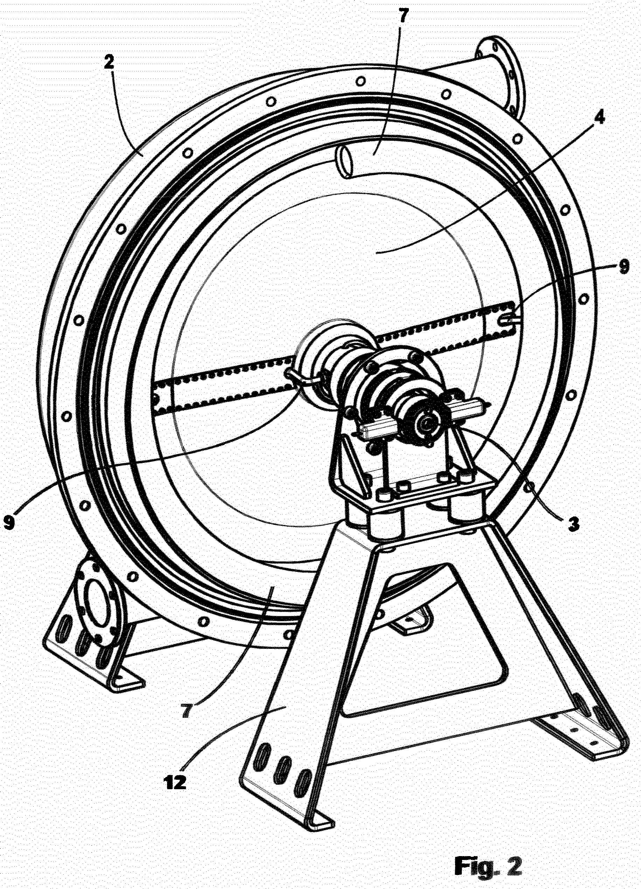

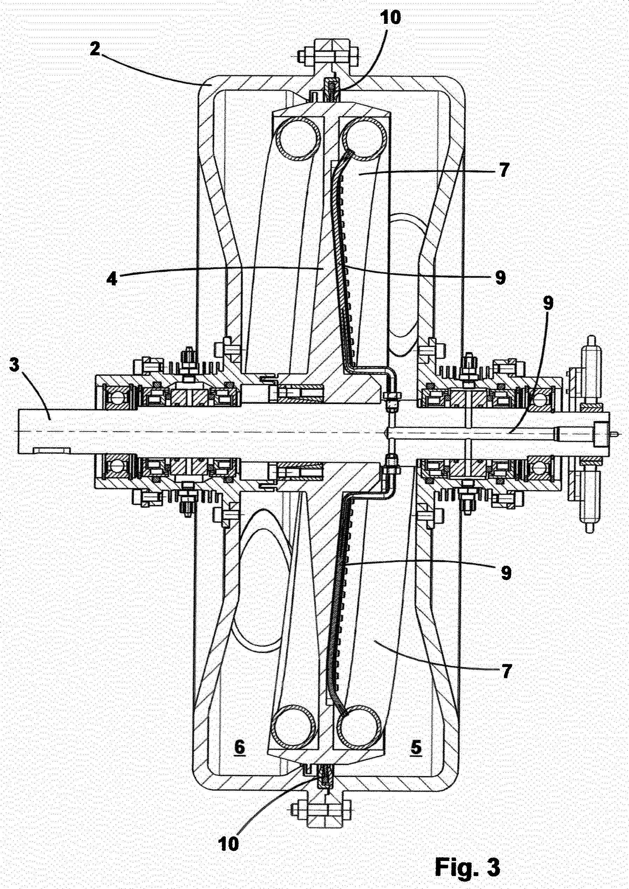

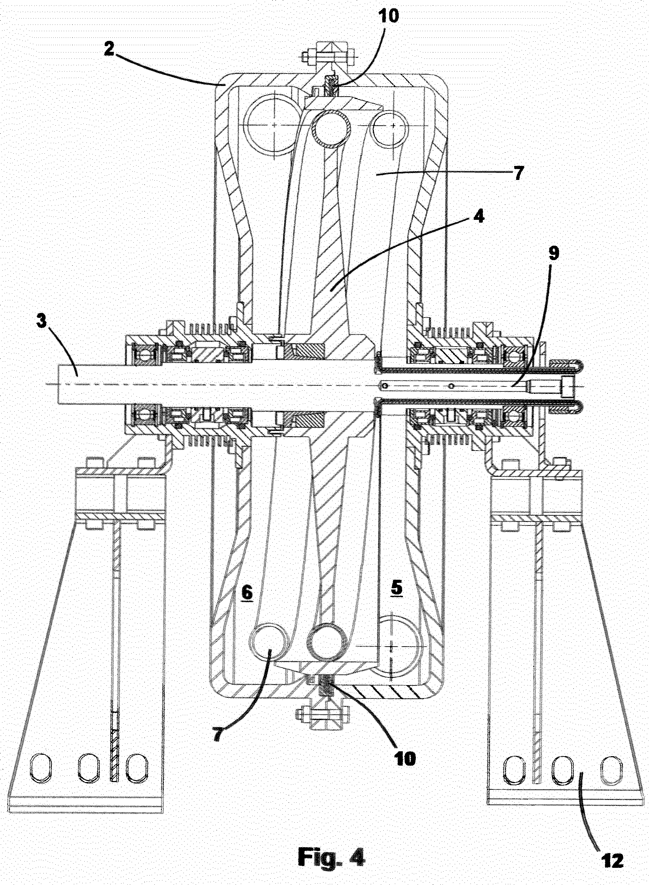

In Fig. 1 ist eine erfindungsgemäße Staustrahlturbine 1 samt zwei Abgasturboladern 8 und zwei Wärmetauschern 11 in Laboranordnung ohne ein Isoliergehäuse dargestellt. Auf einer Halterung 12 ist ein zweiteiliges, als flacher Zylinder ausgebildetes Gehäuse 2 gelagert. Eine Welle 3 durchsetzt das Gehäuse 2, wobei die Welle 3 koaxial zum zylinderförmigen Gehäuse 2 angeordnet ist. Die Welle 3 ist im Gehäuse 2 drehbar gelagert. In der aufgeschnittenen (einseitig offenen) Darstellung der Staustrahlturbine 1 in Fig. 2 ist eine Hälfte des Gehäuses 2 entfernt, um einen Einblick in ein Inneres der Staustrahlturbine 1 zu geben. Auf der Welle 3 ist ein Diskus 4 drehfest gelagert. Der Diskus 4 hat einen kreisförmigen Umriss und ist auf der Welle 3 koaxial zu deren Drehachse angeordnet. Der Diskus 4 unterteilt das Gehäuse 2 in zwei in etwa volumengleiche Kammern, eine Vordruckkammer 5 und eine Auspuffkammer 6. Dies ist in Fig. 3 ersichtlich, welche einen horizontalen Schnitt durch die Staustrahlturbine 1 entlang der Rotations- bzw. Drehachse der Welle 3 zeigt. Da der Diskus 4 gegen das Gehäuse 2 verdrehbar ist, ist zur Abdichtung der Vordruckkammer 5 gegen die Auspuffkammer 6 eine Bürstendichtung 10 zwischen Gehäuse 2 und Diskus 4 vorgesehen. Im radial äußeren Bereich des Diskus 4 sind zwei Staurohre 7 mit Abstand zur Welle 3 angeordnet. Diese Staurohre 7 haben einen spiralförmigen Verlauf, sind mit dem Diskus 4 fest verbunden und durchdringen den Diskus 4 an jeweils einer Stelle. Letzterer Umstand ist insbesondere in Fig. 4 zu erkennen, welche einen vertikalen Schnitt durch die Staustrahlturbine 1 entlang der Drehachse der Welle 3 zeigt. Dadurch sind die Vordruckkammer 5 und die Auspuffkammer 6 über die Staurohre 7 miteinander verbunden; die Staurohre 7 führen von der Vordruckkammer 5 in die Auspuffkammer 6. In Fig. 3 und 4 ist ein I-förmiger (d. h. von der Welle ausgehend betrachtet doppel-T-förmiger) Querschnitt des Diskus 4 zu erkennen. Ein solcher Querschnitt verleiht dem Diskus 4 eine hohe Stabilität und erlaubt eine stabile Lagerung der Staurohre 7 auf dem Diskus 4, da die Staurohre 7 außenseitig durchgehend am Diskus 4 anliegen. Die Staurohre 7 haben eine Länge entsprechend einer ganzen Spiralwindung um die Welle 3, insbesondere überstreicht ein Staurohr 7 einen Winkel zwischen 340° und 380° um die Welle 3. Die Einheit bestehend aus Welle 3, Diskus 4 und Staurohren 7 wird auch als Rotor bezeichnet. Wie in Fig. 3 und 4 ersichtlich, führt ein Brennstoff- bzw. Treibstoffkanal 9 von einem Ende der Welle 3 entlang der Drehachse der Welle 3 und weiter über den Diskus 4 (hier: außen am Diskus 4; eine Führung durch das Innere des Diskus 4 ist ebenfalls möglich) zu jedem der beiden Staurohre 7. Im Bereich eines Endes der Welle 3, an dem der Treibstoffkanal 9 beginnt, sind ein Rotationsanschluss an die Welle 3 zur Brennstoffzufuhr durch eine Kraftstoffpumpe bzw. einen Gasdruckregler sowie als Drehübertrager bzw. Schleifringe ausgebildete Elektrodurchführungen für Zünd-, Mess-, Regel- und Steuerströme vorgesehen. Für eine Zündung ist ein Zündspannungsgenerator vorgesehen. Die Staurohre 7 funktionieren nach dem Grundprinzip der Staustrahltriebwerke. Sie verfügen im Bereich eines ersten Endes über einen Einströmkanal, in dem sich bei Rotation des Diskus 4 ein Staudruck ausbildet, in einem mittleren Bereich über einen Brenn-/Expansionsraum, in dem Zündung und Verbrennung des zugeführten gasförmigen oder flüssigen Treibstoffs erfolgen, und im Bereich eines zweiten Endes über eine Austrittsdüse, welche der Strahlformung zur optimalen Schubentfaltung der ausgestoßenen Gase dient. Der Einströmkanal beginnt in der Vordruckkammer 5, die Austrittsdüse endet in der Auspuffkammer 6. Im Betrieb der Staustrahlturbine 1 strömt ein Gas von der Vordruckkammer 5 durch Einströmkanal, Brenn-/Expansionsraum und Austrittsdüse eines rotierenden Staurohrs 7 in die Auspuffkammer 6, ein Staudruck baut sich im Bereich eines in die Vordruckkammer 5 reichenden Endes eines Staurohrs 7 auf. Wie in Fig. 1 ersichtlich, ist die Auspuffkammer 6, optional über Abgasreinigungsvorrichtungen, mit Abgasturboladern 8 verbunden. Jeder Abgasturbolader 8 wird von aus der Auspuffkammer 6 ausströmenden Abgasen angetrieben, saugt Frischluft an, komprimiert diese und fördert sie in die Vordruckkammer 5, wodurch in der Vordruckkammer 5 ein größerer Druck als in der Auspuffkammer 6 herrscht. Zusätzlich erfolgt eine Wärmeübertragung von den heißen Abgasen auf die komprimierte Frischluft über zwei Wärmetauscher 11. Das Gehäuse 2 der Staustrahlturbine 1 hat typischerweise einen Durchmesser von nur etwa bis zu 30 cm, kann aber auch wesentlich größer dimensioniert sein.

Die Funktionsweise einer erfindungsgemäßen Staustrahlturbine 1 stellt sich folgendermaßen dar: Den Staurohren 7 als zentralen Einheiten strömt durch deren Rotationsbewegung die in die Vordruckkammer 5 durch Abgasturbolader 8 und Wärmetauscher 11 druck- und temperaturerhöht eingebrachte Luft zu. Gehäusevordruck und sich durch die Rotation ausbildender Staudruck werden in den Staurohren 7 bzw. in deren Austrittsdüsen in Geschwindigkeit umgesetzt, was durch eine spezielle Kanalgeometrie erreicht wird. Nach Beimengung des Brennstoffs erfolgt die Zündung, wodurch sich eine Impulsänderung durch zusätzliche Geschwindigkeitszunahme aufgrund der Expansion des Gases ergibt und in der Folge ein entsprechender Rückstoß an der Austrittsdüse erfolgt. Dies ist eine für den vorliegenden Gasturbinenprozess charakteristische zweiphasige Beschleunigung. Nach einer ersten Fremdzündung erfolgt selbstständige Flammerhaltung oder Permanentzündung. Die Abgase werden zum Antrieb der Abgasturbolader 8 und damit zum Vorverdichten angesaugter Luft sowie zur Wärmerückgewinnung über die Wärmetauscher 11 genutzt.

Zur optimalen Wärmedämmung werden das gesamte Aggregat bzw. das Gehäuse 2 und notwendige außen liegende Teile von einer hochtemperaturbeständigen (keramischen) Isolierung ummantelt.

Zur Schonung von Lagern der Welle 3 kann ein entsprechender Gegendruckkompensator vorgesehen sein.

Eine weitere, nicht in den Figuren dargestellte Ausführungsform der Staurohre 7 soll im Folgenden dargelegt werden. Aufgrund des großen Volumenstroms eines Arbeitsmittels und der geringen Zündfreudigkeit und damit Flammgeschwindigkeit wird der Einlaufstrahl im Staurohr 7 aufgeteilt. Ein kleiner Teilstrom, entsprechend der Notwendigkeit des zur Verbrennung nötigen Luftsauerstoffs und zur Bildung eines zündfähigen Gemisches, wird in einen Bypasskanal, in welchem die Geschwindigkeit des Massenstroms zur Verbrennung angepasst (gebremst für eine kürzere Ausbrandstrecke) wird, eingeleitet. Anschließend an die Zündung wird der Teilstrom, wegen der durch die Aufheizung hervorgerufenen Expansion beschleunigt, dem durch die Druckdifferenz beschleunigten Arbeitsstrahl zur Aufheizung durch Mischen zugeführt. Dadurch bleibt der Luftmassenstrom für die Zündung relativ langsam und eine erste Beschleunigungsphase des Arbeitsstroms kann voll ausgebildet werden, ohne einen Verbrennungs- bzw. Ausbrandvorgang negativ zu beeinflussen. Im Ausbrandbereich wird dann eine zweite Beschleunigungsphase isobar vollständig ausgebildet.

Für ein in einer erfindungsgemäßen Staustrahlturbine 1 ablaufendes Verfahren (thermodynamische Prozessführung) ist die bereits erwähnte zweiphasige Beschleunigung charakteristisch. Eine erste Beschleunigungsphase bildet sich wegen der von den Abgasturboladern 8 zwischen Vordruckkammer 5 und Auspuffkammer 6 durch Vorverdichten der zugeführten Luft erzeugten Druckdifferenz aus. Durch diese Druckdifferenz von etwa 2 bis 4 bar, gegebenenfalls auch höher, wird die Luft den Einströmkanälen der Staurohre 7 vorverdichtet zugeführt und die Druckdifferenz zwischen Vordruckkammer 5 und Auspuffkammer 6 wird im Verlauf der Staurohre 7 wie der aufgebaute Staudruck in Geschwindigkeit umgesetzt. Das Druckverhältnis zwischen Vordruckkammer 5 und Auspuffkammer 6 kann über- bzw. unterkritisch sein, was abhängig vom Zustand eine besondere Kanalgeometrie (z. B. Lavaldüse) je nach Zünd- und Flammgeschwindigkeit des eingesetzten Brennstoffs erfordert, um die gesamte Druckdifferenz in Geschwindigkeit umzusetzen. Eine zweite Beschleunigungsphase wird ausgebildet durch Zündung des zugeführten Brennstoffs; es erfolgt eine isobare Verbrennung, dadurch eine Zufuhr von Wärmeenergie, eine Temperaturerhöhung und weiter eine Expansion der Gase in den Staurohren 7, wodurch eine Schubkraft erzeugt wird.

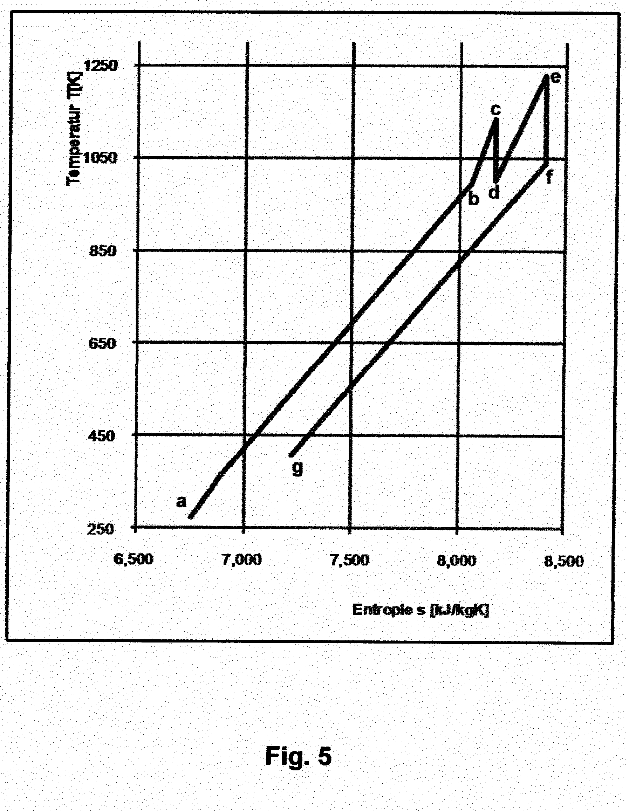

Die beschriebene charakteristische zweiphasige Beschleunigung wird in einem T-s-Diagramm durch einen sogenannten Beschleunigungs- oder Strömungszwickel sichtbar. In Fig. 5 ist ein solches T-s-Diagramm gezeigt, wobei einzelne Zustandspunkte geradlinig verbunden sind. Die Prozessführung beginnt bei Punkt a, wo durch Abgasturbolader 8 und Wärmetauscher 11 eine Druck-, Temperatur- und Entropieerhöhung des einströmenden Gases bis zum Punkt b erfolgt. Sodann erfolgt im Bereich des Einströmkanals des Staurohrs 7 ein Staudruckaufbau bis zum Punkt c. Ab Punkt c erfolgt ein Druckabbau in dem Staurohr 7 aufgrund der zwischen Vordruckkammer 5 und Auspuffkammer 6 herrschenden Druckdifferenz zuzüglich Staudruck bis zum Punkt d. Eine isobare Verbrennung des zugeführten Brenn- bzw. Treibstoffs führt entlang einer Isobare zu Punkt e. Das aus den Staurohren 7 ausgetretene Gas expandiert in Turbinen der Abgasturbolader 8 isentrop (Punkt f) - Gesamtverluste der Ladergruppe sind in der Energiebilanz des Turbokompressors berücksichtigt - und kühlt in den Wärmetauschern 11 ab (Punkt g). Der Verlauf des Graphen von Punkt c über Punkt d zu Punkt e verdeutlicht die für den thermodynamischen Prozess charakteristische zweiphasige Beschleunigung und wird wie erwähnt als Beschleunigungs- oder Strömungszwickel bezeichnet.

## Patentansprüche

1. Staustrahlturbine (1), umfassend ein Gehäuse (2), eine am Gehäuse (2) drehbar gelagerte Welle (3), zumindest einen auf der Welle (3) drehfest angebrachten Diskus (4), welcher das Gehäuse (2) in mehrere Kammern mit zumindest einer Vordruckkammer (5) und zumindest einer Auspuffkammer (6) unterteilt, und zumindest ein mit dem zumindest einen Diskus (4) verbundenes Staurohr (7), in welchem eine Verbrennung eines zugeführten Brennstoffs erfolgt und welches von der zumindest einen Vordruckkammer (5) in die zumindest eine Auspuffkammer (6) führt und welches derart angeordnet ist, dass sich bei Rotation des zumindest einen Diskus (4) in dem zumindest einen Staurohr (7) ein Staudruck aufbaut und dass ein durch aus dem zumindest einen Staurohr (7) in die zumindest eine Auspuffkammer (6) ausgestoßene Gase erzeugter Schub eine Rotation des zumindest einen Diskus (4) bewirkt, **dadurch gekennzeichnet, dass** zumindest ein Abgasturbolader (8) vorgesehen ist, welcher unter Ausnutzung eines aus der zumindest einen Auspuffkammer (6) austretenden Abgases ein Gas unter Druck in die zumindest eine Vordruckkammer (5) fördert.

2. Staustrahlturbine (1) nach Anspruch 1, **dadurch gekennzeichnet, dass** das zumindest eine Staurohr (7) einen Einströmkanal, einen Brennraum und eine Austrittsdüse umfasst, wobei der Einströmkanal in der zumindest einen Vordruckkammer (5) beginnt und die Austrittsdüse in der zumindest einen Auspuffkammer (6) endet.

3. Staustrahlturbine (1) nach Anspruch 1 oder 2, **dadurch gekennzeichnet, dass** das zumindest eine Staurohr (7) eine Länge aufweist, sodass es einen Winkel entsprechend einer halben bis eineinhalb Umdrehungen um die Welle (3), insbesondere zwischen drei und fünf Viertelumdrehungen, überstreicht.

4. Staustrahlturbine (1) nach einem der Ansprüche 1 bis 3, **dadurch gekennzeichnet, dass** eine Zündvorrichtung in dem zumindest einen Staurohr (7) vorgesehen ist.

5. Staustrahlturbine (1) nach Anspruch 4, **dadurch gekennzeichnet, dass** eine Zündvorrichtung und eine Brennstoffzufuhr in das zumindest eine Staurohr (7) im Bereich des Zündstrahls vorgesehen sind.

6. Staustrahlturbine (1) nach einem der Ansprüche 1 bis 5, **dadurch gekennzeichnet, dass** zur Brennstoffzufuhr ein Treibstoffkanal (9) entlang einer Achse der Welle (3) und über den zumindest einen Diskus (4) bis zu dem zumindest einen Staurohr (7) vorgesehen ist.

7. Staustrahlturbine (1) nach einem der Ansprüche 1 bis 6, **dadurch gekennzeichnet, dass** zumindest ein Wärmetauscher (11) vorgesehen ist, welcher Wärmeenergie von den aus der zumindest einen Auspuffkammer (6) ausströmenden Abgasen auf in die zumindest eine Vordruckkammer (5) einströmende Gase überträgt.

8. Staustrahlturbine (1) nach einem der Ansprüche 1 bis 7, **dadurch gekennzeichnet, dass** die Welle (3) mit einem Getriebe und/oder einem Generator zur Umwandlung von mechanischer in elektrische Energie verbunden ist.

9. Verwendung einer Staustrahlturbine (1) gemäß einem der Ansprüche 1 bis 8 zur Erzeugung von mechanischer Energie durch Verbrennung von biogenen gasförmigen oder flüssigen Brennstoffen, insbesondere von Faulgasen von Kläranlagen oder von Altspeiseölen.

10. Verfahren zur Umwandlung von chemischer in mechanische Energie mit einer Staustrahlturbine (1) nach einem der Ansprüche 1 bis 8, wobei in zumindest einem Staurohr (7) Brennstoff verbrannt wird, wodurch ein Schub erzeugt und eine Welle (3) in Rotation versetzt wird, **dadurch gekennzeichnet, dass** Abgase des zumindest einen Staurohrs (7) zum Verdichten eines der Verbrennung zugeführten Gases genutzt werden.

11. Verfahren nach Anspruch 10, **dadurch gekennzeichnet, dass** das Verdichten außerhalb eines Gehäuses (2) erfolgt, in welchem chemische in mechanische Energie umgewandelt wird.

12. Verfahren nach Anspruch 10 oder 11, **dadurch gekennzeichnet, dass** Wärme von den Abgasen auf das der Verbrennung zugeführte Gas übertragen wird.

13. Verfahren nach einem der Ansprüche 10 bis 12, **dadurch gekennzeichnet, dass** der Brennstoff in einem spiralförmigen Staurohr (7) mit kreisförmigem Querschnitt, optional mit veränderlichem Durchmesser und einer Länge entsprechend einer Windungsanzahl, die zwischen einer halben und eineinhalb Umdrehungen um die Welle (3), insbesondere zwischen drei und fünf Viertelumdrehungen, liegt, verbrannt wird.

14. Verfahren nach einem der Ansprüche 10 bis 13, **dadurch gekennzeichnet, dass** das in das zumindest eine Staurohr (7) einströmende Gas in einen Zündstrahl und einen Arbeitsstrahl aufgeteilt wird, wobei beide Teilstrahlen nach Zündung des Zündstrahls wieder zusammengeführt werden und/oder eine Austrittsgeschwindigkeit eines aus dem zumindest einen Staurohr (7) ausströmenden Gases das mindestens 1,5-fache, vorzugsweise das 2- bis 4-fache, einer Umfangsgeschwindigkeit des zumindest einen Staurohrs (7) beträgt.

15. Verfahren nach einem der Ansprüche 10 bis 14, **dadurch gekennzeichnet, dass** der Brennstoff dem zumindest einen Staurohr (7) durch die Welle (3) und über den zumindest einen Diskus (4) zugeführt wird.

## Claims

1. A ramjet turbine (1), comprising a housing (2), a shaft (3) rotatably mounted on the housing (2), at least one disk (4), which is attached to the shaft (3) in a rotationally fixed manner and which divides the housing (2) into a plurality of chambers comprising at least one precompression chamber (5) and at least one exhaust chamber (6), and at least one pilot tube (7), which is connected to the at least one disk (4) and in which a combustion of a fed fuel takes place and which leads from the at least one precompression chamber (5) into the at least one exhaust chamber (6) and which is arranged in such a way that a ram pressure builds up in the at least one pilot tube (7) in response to the rotation of the at least one disk (4) and that a thrust created by means of gas emitted from the at least one pilot tube (7) into the at least one exhaust chamber (6) effects a rotation of the at least one disk (4), **characterized in that** at least one exhaust turbocharger (8) is provided, which conveys a gas under pressure into the at least one precompression chamber (5) by utilizing an exhaust gas escaping from the at least one exhaust chamber (6).

2. The ramjet turbine (1) according to claim 1, **characterized in that** the at least one pilot tube (7) comprises an inflow channel, a combustion chamber and an outlet nozzle, wherein the inflow channel starts in the at least one precompression chamber (5) and the outlet nozzle ends in the at least one exhaust chamber (6).

3. The ramjet turbine (1) according to claim 1 or 2, **characterized in that** at least one pilot tube (7) has a length, so that it sweeps an angle corresponding to one-half to one and one-half rotations around the shaft (3), in particular between three and five quarter rotations.

4. The ramjet turbine (1) according to one of claims 1 to 3, **characterized in that** an ignition device is provided in the at least one pilot tube (7).

5. The ramjet turbine (1) according to claim 4, **characterized in that** an ignition device and a fuel feed into the at least one pilot tube (7) are provided in the area of the pilot jet.

6. The ramjet turbine (1) according to one of claims 1 to 5, **characterized in that** a fuel channel (9) is provided for the fuel feed along an axis of the shaft (3) and via which at least one disk (4) to the at least one pilot tube (7).

7. The ramjet turbine (1) according to one of claims 1 to 6, **characterized in that** at least one heat exchanger (11) is provided, which transfers thermal energy from the exhaust gases flowing out of the at least one exhaust chamber (6) to the gases flowing into the at least one precompression chamber (5).

8. The ramjet turbine (1) according to one of claims 1 to 7, **characterized in that** the shaft (3) is connected to a drive and/or a generator for converting mechanical into electrical energy.

9. A use of a ramjet turbine (1) according to one of claims 1 to 8, for generating mechanical energy by combustion of biogenic gaseous or liquid fuels, in particular of biogas from waste water treatment plants or from used cooking oils.

10. A method for converting chemical into mechanical energy comprising a ramjet turbine (1) according to one of claims 1 to 8, wherein fuel is combusted in at least one pilot tube (7), whereby a thrust is created and a shaft (3) is set into rotation, **characterized in that** exhaust gases of the at least one pilot tube (7) are used to compress a gas fed to the combustion.

11. The method according to claim 10, **characterized in that** the compression takes place outside of a housing (2), in which chemical energy is converted into mechanical energy.

12. The method according to claim 10 or 11, **characterized in that** heat is transferred from the exhaust gases to the gas, which is fed to the combustion.

13. The method according to one of claims 10 to 12, **characterized in that** the fuel is combusted in a spiral pilot tube (7) comprising a circular cross section, optionally comprising a variable diameter and a length corresponding to a number of coils, which lies between one-half and one and one-half rotations around the shaft (3), in particular between three and five quarter rotations.

14. The method according to one of claims 10 to 13, **characterized in that** the gas, which flows into the at least one pilot tube (7), is divided into a pilot jet and a working jet, wherein both partial jets are brought together again after ignition of the pilot jet and/or an exit speed of a gas flowing out of the at least one pilot tube (7) is at least 1.5-times, preferably 2- to 4-times, of a circumferential speed of the at least one pilot tube (7).

15. The method according to one of claims 10 to 14, **characterized in that** the fuel is fed to the at least one pilot tube (7) through the shaft (3) and via the at least one disk (4).

## Revendications

1. Turbine pour statoréacteur (1), comprenant un carter (2), un arbre (3) logé en rotation sur le carter (2), au moins un disque (4) monté sur l'arbre (3) de manière solidaire en rotation, lequel divise le carter (2) en plusieurs chambres avec au moins une chambre de précompression (5) et au moins une chambre d'échappement (6) et au moins un tube de refoulement (7) relié avec l'au moins un disque (4), dans lequel a lieu une combustion d'un combustible alimenté, lequel mène de l'au moins une chambre de précompression (5) dans l'au moins une chambre d'échappement (6) et lequel est placé de telle sorte que lors d'une rotation de l'au moins un disque (4), il s'établisse dans l'au moins un tube de refoulement (7) une pression de refoulement et qu'une poussée générée par un gaz expulsé hors de l'au moins un tube de refoulement (7) dans l'au moins une chambre d'échappement (6) provoque une rotation de l'au moins un disque (4), **caractérisée en ce qu'**il est prévu au moins une turbosoufflante des gaz d'échappement (8), qui en exploitant des gaz d'échappement sortant de l'au moins une chambre d'échappement (6) transporte un gaz sous pression dans l'au moins une chambre de précompression (5).

2. Turbine pour statoréacteur (1) selon la revendication 1, **caractérisée en ce que** l'au moins un tube de refoulement (7) comprend un canal d'admission, une chambre de combustion et une buse de sortie, le canal d'admission commençant dans l'au moins une chambre de précompression (5) et la buse de sortie se terminant dans l'au moins une chambre d'échappement (6).

3. Turbine pour statoréacteur (1) selon la revendication 1 ou 2, **caractérisée en ce que** l'au moins un tube de refoulement (7) présente une longueur telle qu'il balaye un angle correspondant à d'un demi-tour à un tour et demi autour de l'arbre (3), notamment à entre trois et cinq quarts de tours.

4. Turbine pour statoréacteur (1) selon l'une quelconque des revendications 1 à 3, **caractérisée en ce qu'**un dispositif d'amorçage est prévu dans l'au moins un tube de refoulement (7).

5. Turbine pour statoréacteur (1) selon la revendication 4, **caractérisée en ce qu'**un dispositif d'amorçage et une alimentation de combustible sont prévus dans l'au moins un tube de refoulement (7), dans la zone du jet d'amorçage.

6. Turbine pour statoréacteur (1) selon l'une quelconque des revendications 1 à 5, **caractérisée en ce que** pour l'alimentation de combustible, un canal à carburant (9) est prévu le long d'un axe de l'arbre (3) et par l'intermédiaire de l'au moins un disque (4) jusqu'à l'au moins un tube de refoulement (7).

7. Turbine pour statoréacteur (1) selon l'une quelconque des revendications 1 à 6, **caractérisée en ce qu'**il est prévu au moins un échangeur thermique (11), lequel transmet de l'énergie thermique des gaz d'échappement dégagés hors de l'au moins une chambre d'échappement (6) sur les gaz affluant dans l'au moins une chambre de précompression (5).

8. Turbine pour statoréacteur (1) selon l'une quelconque des revendications 1 à 7, **caractérisée en ce que** l'arbre (3) est relié avec une transmission et/ou un générateur, pour transformer de l'énergie mécanique en énergie électrique.

9. Utilisation d'une turbine pour statoréacteur (1) selon l'une quelconque des revendications 1 à 8 pour générer de l'énergie mécanique par combustion de combustibles biogènes gazeux ou liquides, notamment de gaz de fermentation de stations d'épuration ou d'huiles alimentaires usagées.

10. Procédé, destiné à transformer de l'énergie chimique en énergie mécanique à l'aide d'une turbine pour statoréacteur (1) selon l'une quelconque des revendications 1 à 8, lors duquel, dans au moins un tube de refoulement (7) on fait brûler un combustible, suite à quoi une poussée est générée et un arbre (3) est amené en rotation, **caractérisé en ce que** des gaz d'échappement de l'au moins un tube de refoulement (7) sont exploités pour condenser un gaz alimenté vers la combustion.

11. Procédé selon la revendication 10, **caractérisé en ce que** la condensation a lieu à l'extérieur d'un carter (2) dans lequel de l'énergie chimique est transformée en énergie mécanique.

12. Procédé selon la revendication 10 ou 11, caractérisé en ce de la chaleur est transmise des gaz d'échappement sur le gaz alimenté vers la combustion.

13. Procédé selon l'une quelconque des revendications 10 à 12, **caractérisé en ce qu'**on fait brûler le combustible dans un tube de refoulement (7) en forme de spirale, pourvu d'une section transversale de forme circulaire, en option à diamètre variable et d'une longueur correspondant à un nombre de spires qui se situe entre un demi-tour et un tour et demi autour de l'arbre (3), notamment entre trois et cinq quarts de tour.

14. Procédé selon l'une quelconque des revendications 10 à 13, **caractérisé en ce que** le gaz affluant dans l'au moins un tube de refoulement (7) est divisé en un jet d'amorçage et en un jet de travail, les deux jets partiels étant à nouveau réunis après l'amorçage du jet d'amorçage et/ou une vitesse de sortie d'un gaz s'échappant de l'au moins un tube de refoulement (7) s'élevant à au moins 1,5 fois, de préférence à de 2 à 4 fois une vitesse périphérique de l'au moins un tube de refoulement (7).

15. Procédé selon l'une quelconque des revendications 10 à 14, **caractérisé en ce que** le combustible est alimenté vers l'au moins un tube de refoulement (7) par l'arbre (3) et par l'intermédiaire de l'au moins un disque (4) .
